(19) Europäisches Patentamt
European Patent Office
Office européen des brevets

(11) **EP 4 198 722 A1**

(12) **EUROPÄISCHE PATENTANMELDUNG**

(43) Veröffentlichungstag:
**21.06.2023 Patentblatt 2023/25**

(21) Anmeldenummer: **21215811.7**

(22) Anmeldetag: **20.12.2021**

(51) Internationale Patentklassifikation (IPC):
*G06F 9/455* (2018.01) *G06F 9/48* (2006.01)

(52) Gemeinsame Patentklassifikation (CPC):
**G06F 9/45558; G06F 9/4887;** G06F 2009/4557

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **dSPACE GmbH**
**33102 Paderborn (DE)**

(72) Erfinder:
• **Sielhorst, Dr. Tobias**
  **33102 Paderborn (DE)**
• **Wolf, Artur**
  **33102 Paderborn (DE)**

(54) **KONFIGURATION EINER AUF EINEM COMPUTER LAUFENDEN SIL-SIMULATION EINES STEUERGERÄTS**

(57)    Erfindunsgemäß wird ein Verfahren zur Konfiguration einer auf einem Computer laufenden SIL-Simulation eines Steuergeräts bereitgestellt, wobei für die SIL-Simulation des Steuergeräts auf dem Computer Software-Modelle für das Steuergerät mit einer Mehrzahl von Tasks installiert sind, die in einem vorbestimmten Takt mit einer vorbestimmten Periode zwischen den einzelnen Taktzeitpunkten abgearbeitet werden, und der Computer eine Mehrzahl von Prozessorkernen aufweist, auf denen eine Mehrzahl virtueller Maschinen läuft, die jeweils vorbestimmte Tasks abarbeiten, mit folgenden Verfahrensschritten:

a) Ermitteln sporadischer Modellanteile und periodischer Modellanteile der Software-Modelle,

b) Erstellen einer Gruppe parallelisierbarer Tasks aus den periodischen Modellanteilen der Software-Modelle,

c) Bestimmen der einzelnen Taktzeitpunkte der parallelisierbaren Tasks bis zum kleinsten gemeinsamen Vielfachen aller Perioden zwischen den Taktzeitpunkten der parallelisierbaren Tasks,

d) Ermitteln der Berechnungsdauer der einzelnen Tasks zu ihren jeweiligen Taktzeitpunkten und

e) Ermitteln der Verteilung der Tasks auf die einzelnen virtuellen Maschinen und der Verteilung der virtuellen Maschinen auf die einzelnen Prozessorkerne auf der Grundlage des bestimmten kleinsten gemeinsamen Vielfachen aller Perioden zwischen den Taktzeitpunkten der parallelisierbaren Tasks und der ermittelten Berechnungsdauer der einzelnen Tasks zu ihren jeweiligen Taktzeitpunkten derart, dass die Rechenzeit der SIL-Simulation minimal ist.

Damit wird eine Möglichkeit bereitgestellt, die Rechenzeit eines SIL-Tests möglichst gering zu halten.

Fig. 1

**Beschreibung**

Die Erfindung betrifft ein Verfahren zur Konfiguration einer auf einem Computer laufenden SIL-Simulation eines Steuergeräts, wobei für die SIL-Simulation des Steuergeräts auf dem Computer Software-Modelle für das Steuergerät mit einer Mehrzahl von Tasks installiert sind, die in einem vorbestimmten, periodisch aufeinanderfolgende Taktzeitpunkte aufweisenden Takt abgearbeitet werden, und der Computer eine Mehrzahl von Prozessorkernen aufweist, auf denen eine Mehrzahl virtueller Maschinen läuft, die jeweils vorbestimmte Tasks abarbeiten.

Ein virtuelles Steuergerät, eine sogenannte V-ECU, ist eine Software, die in einem Simulationsszenario ein echtes Steuergerät oder einen Teil eines echten Steuergeräts simuliert. Verallgemeinert wird vorliegend von VPUs (virtual processing units) gesprochen, wenn mittels eines Software-Modells eine prozessorbetriebene Einrichtung auf einem Computer simuliert wird.

Verschiedene V-ECU-Versionen decken einen großen Variantenbereich ab - von sehr einfachen Versionen bis hin zu einer Komplettversion, die alle Komponenten eines realen Steuergeräts enthält: Die einfachste Form einer V-ECU hat für jede Funktion nur eine Komponente. In einer komplexeren Version enthält die V-ECU mehrere verknüpfte Software-Komponenten, zum Beispiel die komplette Funktionalität eines Steuergeräts. Im Bereich Automotive gehört z.B. auch die AUTOSAR Runtime Environment (RTE) und das Betriebssystem für realistisches Task Scheduling dazu. Bei Bedarf können ausgewählte Software-Komponenten hinzugefügt werden, um die Buskommunikation oder den NVRAM zu simulieren. Eine V-ECU wird noch realistischer, wenn der echte Basis-Software-Code hinzugefügt wird, der auch im Seriencode verwendet wird. Eine V-ECU enthält somit Komponenten von Applikations- und Basis-Software und bietet daher Funktionalitäten, die mit denen echter Steuergeräte vergleichbar sind. Eingesetzt wird sie z.B. für die Validierung während einer Computer-basierten Simulation.

Da beim Einsatz einer V-ECU nicht mit realer Steuergeräte-Hardware gearbeitet wird, kann die Simulation schneller als in Echtzeit erfolgen, so dass die Analyse des simulierten Steuergeräts sehr zeitsparend und komfortabel erfolgen kann.

Durch Software-in-the-Loop-Test (SIL)-Tests) in Computer-basierte Simulationen können Software-Funktionen, V-ECUs oder komplette V-ECU-Netzwerke simuliert und getestet werden. Wie oben schon angesprochen, kann dies in Echtzeit oder sogar schneller und hochgradig parallel erfolgen.

Software-Entwicklungsprozesse für klassische Automobilanwendungen, wie Antriebsstrang- oder Bremssystemen, bis hin zu E-Drive-Anwendungen und Funktionen für das autonome Fahren können mittels SIL-Tests durch virtuelles Testen und Validieren deutlich beschleunigt werden. So kann ein DUT (device under test) komfortabel auf einem Computer simuliert werden, es kann mit physikalisch basierten Modellen verbunden werden und Testskripte können später auf Hardware-in-the-Loop (HIL)-Systemen einfach wiederverwendet werden.

Bei SIL-Tests hat die Wahl der Hardware und der Modelltopologie eine signifikante Auswirkung auf die Ausführungsgeschwindigkeit der Simulation bei gleichem Ergebnis. Dabei gibt es viele Parameter, die veränderbar sind, so dass ein Nutzer sehr viel Wissen über den Simulator, dessen Hardware und die Modelltopologie mitbringen muss, um zu einer effizienten Abarbeitung eines SIL-Tests auf einem Computer zu gelangen.

Davon ausgehend ist es die Aufgabe der Erfindung, eine Möglichkeit bereitzustellen, die Rechenzeit eines SIL-Tests möglichst gering zu halten.

Diese Aufgabe wird durch den Gegenstand des Patentanspruchs 1 gelöst. Bevorzugte Weiterbildungen finden sich in den Unteransprüchen.

Erfindungsgemäß wird somit ein Verfahren zur Konfiguration einer auf einem Computer laufenden SIL-Simulation eines Steuergeräts bereitgestellt, wobei für die SIL-Simulation des Steuergeräts auf dem Computer Software-Modelle für das Steuergerät mit einer Mehrzahl von Tasks installiert sind, die in einem vorbestimmten, periodisch aufeinanderfolgende Taktzeitpunkte aufweisenden Takt abgearbeitet werden, und der Computer eine Mehrzahl von Prozessorkernen aufweist, auf denen eine Mehrzahl virtueller Maschinen läuft, die jeweils vorbestimmte Tasks abarbeiten, mit folgenden Verfahrensschritten:

    a) Ermitteln sporadischer Modellanteile und periodischer Modellanteile der Software-Modelle,
    b) Erstellen einer Gruppe parallelisierbarer Tasks aus den periodischen Modellanteilen der Software-Modelle,
    c) Bestimmen der einzelnen Taktzeitpunkte der parallelisierbaren Tasks bis zum kleinsten gemeinsamen Vielfachen aller Perioden zwischen den Taktzeitpunkten der parallelisierbaren Tasks,
    d) Ermitteln der Berechnungsdauer der einzelnen Tasks zu ihren jeweiligen Taktzeitpunkten und
    e) Ermitteln der Verteilung der Tasks auf die einzelnen virtuellen Maschinen und der Verteilung der virtuellen Maschinen auf die einzelnen Prozessorkerne auf der Grundlage des bestimmten kleinsten gemeinsamen Vielfachen aller Perioden zwischen den Taktzeitpunkten der parallelisierbaren Tasks und der ermittelten Berechnungsdauer der einzelnen Tasks zu ihren jeweiligen Taktzeitpunkten derart, dass die Rechenzeit der SIL-Simulation minimal ist.

Durch die Erfindung wird eine besonders effiziente Wahl und Nutzung der Hardware erreicht. Wenn der Parallelitätsgrad in den wiederkehrenden Zeitpunkten gering ist, kann das auf ein nicht optimal ausgelastetes System hinweisen bzw. der Parallelitätsgrad in den häufigsten Ereignissen kann einen Hinweis auf die benötigten Rechenkerne ergeben. Der längste zu berechnende Task pro Taktzeitpunkt bestimmt den Minimalwert der Rechenlänge und gibt an, wie lang die Rechenlänge, selbst bei einer Hardwareoptimierung, bleiben würde. Wird in Schritt e) ermittelt, dass die bestehende Konfiguration nicht zu einer minimalen Rechenzeit führt, wird erfindungsgemäß also eine Umkonfiguration vorgeschlagen.

Im Übrigen gilt, dass eine Mehrzahl von Prozessorkernen bereitgestellt sein kann durch eine Mehrzahl von Einkernprozessoren oder durch einen Mehrkernprozessor oder durch eine Mehrzahl von Mehrkernprozessoren. Die Periode zwischen den einzelnen Taktzeitpunkten bestimmt die Taktrate.

Wenn es vorliegend heißt, dass für die SIL-Simulation des Steuergeräts auf dem Computer Software-Modelle für das Steuergerät installiert sind, so stellen diese Software-Modelle ein virtuelles Abbild des Steuergeräts dar, wobei die Software-Modelle zu Eingangssignalen und/oder Eingangswerten passende Ausgangssignale bzw. Ausgangswerte liefern, und zwar so wie sie das Steuergerät liefern würde, wenn man es mit entsprechenden Eingangssignalen und/oder Eingangswerten beaufschlagen würde.

Gemäß einer bevorzugten Ausführungsform der Erfindung weist das Verfahren den zusätzlichen Schritt auf:
f) Umkonfigurieren der Software-Modelle entsprechend der in Schritt e) ermittelten Verteilung der Tasks auf die einzelnen virtuellen Maschinen und der Verteilung der virtuellen Maschinen auf die einzelnen Prozessorkerne.

In Schritt f) wird die in Schritt e) ermittelte Umkonfiguration also umgesetzt.

Weiterhin ist es bevorzugt, dass der Schritt e) des Ermittelns der Verteilung der Tasks auf die einzelnen virtuellen Maschinen und der der Verteilung der virtuellen Maschinen auf die einzelnen Prozessorkerne die folgende Umkonfiguration umfasst:
Auslagern eines Teils der SIL-Simulation auf wenigstens einen weiteren Computer, wenn die Anzahl der Tasks die Anzahl der Prozessorkerne des bisher für die SIL-Simulation verwendeten Computers übersteigt.

Weil der Kommunikationsaufwand durch die Software-Modelle bekannt ist, kann genau berechnet werden, wo die Trennung optimal ist: Hier kann jede Auftrennungsmöglichkeit einmal mit dem Kommunikationsaufwand und dem Parallelisierungsgewinnen gegengerechnet werden.

Ferner ist gemäß einer bevorzugten Ausgestaltung der Erfindung vorgesehen, dass der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Ändern der Periode einer bestimmten Task auf eine größere Periode, vorzugsweise auf die nächstgrößere Periode.

Dies kann angezeigt sein, wenn die Berechnung eines Tasks keine Eingänge und Ausgänge zu gleichen Taktzeitpunkten aufweist. Die Taktzeitpunkten, an denen parallel gerechnet werden kann, haben einen zu geringen Anteil an der Gesamtrechenzeit, so dass die Parallelberechnung kaum einen Einfluss auf die Gesamtrechenzeit hat. Besser abgestimmte Perioden können aber die Rechengeschwindigkeit positiv beeinflussen.

Hinsichtlich einer Umkonfiguration sind unterschiedliche Ansätze möglich. Gemäß einer bevorzugten Weiterbildung der Erfindung ist jedoch vorgesehen, dass der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Aufteilen eines rechenintensiveren Tasks in wenigstens zwei weniger rechenintensive Tasks.

Dies kann angezeigt sein, wenn die Tasks eine unterschiedliche Rechenlast haben, so dass die Gewinne durch Parallelisierung kaum einen Einfluss haben.

Im Rahmen einer möglichen Umkonfiguration ist vorzugsweise auch vorgesehen, dass der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Wechseln auf schnellere Prozessorkerne.

Es sind im Rahmen der Erfindung somit auch Änderungen möglich, die eine Änderung der Hardware bedeuten.

Weiterhin sieht eine bevorzugte Ausgestaltung der Erfindung vor, dass der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Zusammenlegen wenigstens eines Teils der Tasks, die miteinander kommunizieren.

Sofern auch Bussimulation und Portkommunikation mit berücksichtigt werden, können also auch Vorschläge in umgekehrter Richtung gemacht werden.

Ferner ist gemäß einer bevorzugten Weiterbildung der Erfindung vorgesehen, dass der Schritt e) des Ermittelns der Verteilung der Tasks auf die einzelnen virtuellen Maschinen und der der Verteilung der virtuellen Maschinen auf die einzelnen Prozessorkerne die folgende Umkonfiguration umfasst:
Zuweisen wenigstens eines weiteren Prozessorkerns zu einer virtuellen Maschine.

Die Erfindung betrifft ferner ein nichtflüchtiges, computerlesbares Speichermedium mit einem darauf abgespeicherten Computerprogramm, das bei Ausführung auf einem Prozessor ein Verfahren nach einem der vorhergehenden Ansprüche bewirkt.

Außerdem wird im Rahmen der Erfindung ein Verfahren zur Konfiguration einer auf einem Computer laufenden SIL-Simulation eines Steuergeräts bereitgestellt, wobei für die SIL-Simulation des Steuergeräts auf dem Computer Software-Modelle für das Steuergerät mit einer Mehrzahl von Tasks installiert sind, die in einem vorbestimmten Takt mit einer vorbestimmten Periode zwischen den einzelnen Taktzeitpunkten abgearbeitet werden, und der Computer eine Mehrzahl von Prozessorkernen aufweist, auf denen eine Mehrzahl virtueller Maschinen läuft, die jeweils vorbestimmte Tasks abarbeiten, mit folgenden Verfahrensschritten:

a) Ermitteln sporadischer Modellanteile und periodischer Modellanteile der Software-Modelle,
b) Erstellen einer Gruppe parallelisierbarer Tasks aus den periodischen Modellanteilen der Software-Modelle,
c) Bestimmen der einzelnen Taktzeitpunkte der parallelisierbaren Tasks bis zum kleinsten gemeinsamen Vielfachen aller Perioden zwischen den Taktzeitpunkten der parallelisierbaren Tasks und
g) Visualisieren der Tasks, die zu einem jeweiligen Taktzeitpunkt auszuführen sind.

Im Rahmen der Erfindung ist es jedoch nicht zwingend, dass das Verfahren bereits eine Umkonfiguration veranlasst. Bereits die Visualisierung der Tasks, die zu einem jeweiligen Taktzeitpunkt auszuführen sind, kann für einen Nutzer bei der Konfiguration hilfreich sein.

Das zuvor beschriebene Verfahren weist vorzugsweise den folgenden zusätzlichen Verfahrensschritt auf:

d) Ermitteln der Berechnungsdauer der einzelnen Tasks zu ihren jeweiligen Taktzeitpunkten, wobei in Schritt g) des Visualisierens der Tasks, die zu einem jeweiligen Taktzeitpunkt auszuführen sind, zusätzlich die jeweilige Berechnungsdauer der einzelnen Tasks visualisiert wird.

Nachfolgend wird die Erfindung anhand eines bevorzugten Ausführungsbeispiels unter Bezugnahme auf die Zeichnungen weiter im Detail erläutert.

In den Zeichnungen zeigen

Fig. 1 ein Ablaufdiagramm eines Verfahrens gemäß einem ersten bevorzugten Ausführungsbeispiel der Erfindung,

Fig. 2 ein Ablaufdiagramm eines Verfahrens gemäß einem zweiten bevorzugten Ausführungsbeispiel der Erfindung,

Fig. 3 ein Ablaufdiagramm eines Verfahrens gemäß einem dritten bevorzugten Ausführungsbeispiel der Erfindung,

Fig. 4 eine Visualisierung im Rahmen des zweiten bevorzugten Ausführungsbeispiels der Erfindung und

Fig. 5 eine Visualisierung im Rahmen des dritten bevorzugten Ausführungsbeispiels der Erfindung.

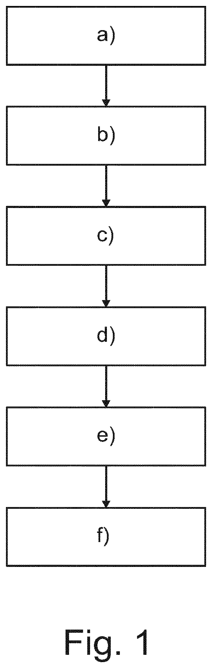

Aus Figur 1 ist ein Ablaufdiagramm für ein Verfahren gemäß einem ersten bevorzugten Ausführungsbeispiel der Erfindung ersichtlich. Dabei handelt es sich um ein Verfahren zur Konfiguration einer auf einem Computer laufenden SIL-Simulation eines Steuergeräts, wobei für die SIL-Simulation des Steuergeräts auf dem Computer Software-Modelle für das Steuergerät mit einer Mehrzahl von Tasks installiert sind, die in einem vorbestimmten Takt mit einer vorbestimmten Periode zwischen den einzelnen Taktzeitpunkten abgearbeitet werden, und der Computer eine Mehrzahl von Prozessorkernen aufweist, auf denen eine Mehrzahl virtueller Maschinen läuft, die jeweils vorbestimmte Tasks abarbeiten.

In einem ersten Verfahrensschritt a) erfolgt ein Ermitteln sporadischer Modellanteile und periodischer Modellanteile der Software-Modelle. Daran schließt sich Schritt b) des Erstellens einer Gruppe parallelisierbarer Tasks aus den periodischen Modellanteilen der Software-Modelle an. Nun werden in Schritt c) die einzelnen Taktzeitpunkte der parallelisierbaren Tasks bis zum kleinsten gemeinsamen Vielfachen aller Perioden zwischen den Taktzeitpunkten der parallelisierbaren Tasks bestimmt. Es folgt in Schritt d) die Ermittlung der Berechnungsdauer der einzelnen Tasks zu ihren jeweiligen Taktzeitpunkten.

Damit lässt sich dann in Schritt e) die Verteilung der Tasks auf die einzelnen virtuellen Maschinen und der Verteilung der virtuellen Maschinen auf die einzelnen Prozessorkerne auf der Grundlage des bestimmten kleinsten gemeinsamen Vielfachen aller Perioden zwischen den Taktzeitpunkten der parallelisierbaren Tasks und der ermittelten Berechnungsdauer der einzelnen Tasks zu ihren jeweiligen Taktzeitpunkten derart ermitteln, dass die Rechenzeit der SIL-Simulation minimal ist. Dabei wird auch eine Umkonfiguration berücksichtigt, gemäß der ein Teil der SIL-Simulation auf wenigstens einen weiteren Computer ausgelagert wird, wenn die Anzahl der Tasks die Anzahl der Prozessorkerne des bisher für die SIL-Simulation verwendeten Computers übersteigt. Ferner wird in Schritt e) auch eine derartige Umkonfiguration berücksichtigt, die ein Ändern der Periode zwischen den einzelnen Taktzeitpunkten auf die größte Periode zwischen identischen parallelisierbaren Tasks umfasst. Mögliche weitere Umkonfiguration umfassen das Aufteilen eines rechenintensiveren Tasks in wenigstens zwei weniger rechenintensive Tasks, das Wechseln auf schnellere Prozessorkerne, das Zusammenlegen wenigstens eines Teils solcher Tasks, die miteinander kommunizieren und das Zuweisen wenigstens eines weiteren Prozessorkerns zu einer virtuellen Maschine.

In Schritt f) erfolgt schließlich das eigentliche Umkonfigurieren der Software-Modelle entsprechend der in Schritt e) ermittelten Verteilung der Tasks auf die einzelnen virtuellen Maschinen und der Verteilung der virtuellen Maschinen auf die einzelnen Prozessorkerne.

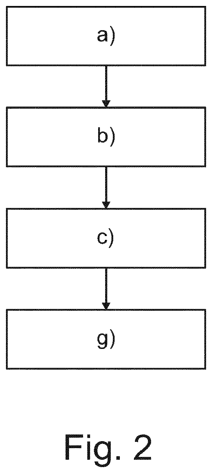

Im Rahmen der Erfindung ist es jedoch nicht zwingend, dass das Verfahren bereits eine Umkonfiguration veranlasst. Wie aus Figur 2 ersichtlich, ist ein alternatives Verfahren gemäß einem zweiten bevorzugten Ausführungsbeispiel wie folgt ausgestaltet.

Auch hier handelt es sich um ein Verfahren zur Konfiguration einer auf einem Computer laufenden SIL-Simulation eines Steuergeräts, wobei für die SIL-Simulation des Steuergeräts auf dem Computer Software-Modelle für das Steuergerät mit einer Mehrzahl von Tasks installiert sind, die in einem vorbestimmten Takt mit einer vorbestimmten Periode zwischen den einzelnen Taktzeitpunkten abgearbeitet werden, und der Computer eine Mehrzahl von Prozessorkernen aufweist, auf denen eine Mehrzahl virtueller Maschinen läuft. Dabei sind die Schritte a) bis c) grundsätzlich dieselben wie bei dem ersten bevorzugten Ausführungsbeispiel der Erfindung.

In einem ersten Verfahrensschritt a) erfolgt ein Ermitteln sporadischer Modellanteile und periodischer Modellanteile der Software-Modelle. Daran schließt sich Schritt b) des Erstellens einer Gruppe parallelisierbarer Tasks aus den periodischen Modellanteilen der Software-Modelle an. Nun werden in Schritt c) die einzelnen Taktzeitpunkte der parallelisierbaren Tasks bis zum kleinsten gemeinsamen Vielfachen aller Perioden zwischen den Taktzeitpunkten der parallelisierbaren Tasks bestimmt. Daran schließt sich nun aber ein Schritt g) in dem die Tasks, die zu einem jeweiligen Taktzeitpunkt auszuführen sind, erst mal nur visualisiert werden. Bereits eine solche Visualisierung kann für einen Nutzer bei der vorliegend in Rede stehenden Konfiguration von Nutzen sein.

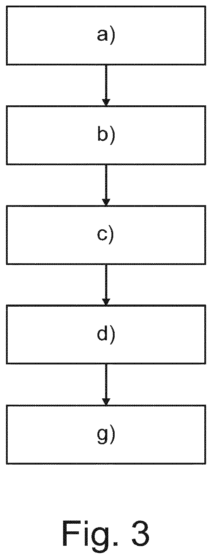

Das Verfahren gemäß dem zuvor beschriebenen zweiten bevorzugten Ausführungsbeispiel der Erfindung kann weiterhin dahingehen ausgestaltet sein, wie in Figur 3 dargestellt. Dieses dritte bevorzugte Ausführungsbeispiel der Erfindung sieht anschließend an den Schritt c) einen Schritt d) vor, in dem die Berechnungsdauern der einzelnen Tasks zu ihren jeweiligen Taktzeitpunkten ermittelt werden. Insofern ist Schritt g) Gegenüber dem zweiten bevorzugten Ausführungsbeispiel der Erfindung dahin abgewandelt, dass das Visualisieren der Tasks, die zu einem jeweiligen Taktzeitpunkt auszuführen sind, zusätzlich die jeweilige Berechnungsdauer der einzelnen Tasks beinhaltet.

Im Folgenden wird im Einzelnen auf mögliche Ausgestaltungen der zuvor beschriebenen bevorzugten Ausführungsbeispiele der Erfindung eingegangen.

Die zuvor beschriebenen Verfahren bestehen aus mehreren Teilen, nämlich z.B. aus einer Analyse des Systems, einem automatischen Profiling des Systems, was bedeutet, dass der Programmcode einer Simulation durchlaufen wird, so dass die Auslastung des Systems erkennbar wird, einer Visualisierung des Systems und des Profils und der Ausgabe von Verbesserungsvorschlägen für einen höheren Durchsatz. Dabei kann ein wesentlicher Aspekt die Bestimmung einer möglichst optimalen virtuellen Maschine bezüglich der Laufzeitkosten sein.

Bei der Simulation laufen die einzelnen Modelle zu einem gewissen Grad parallel. Die konkrete Lastverteilung erfolgt über das Betriebssystem über nebenläufige Prozesse. Die Simulation stellt dabei durch eine Synchronisierung der Modelle sicher, dass das Ergebnis immer gleichbleibt. Der Parallelisierungsgrad ist durch die Anzahl der verfügbaren Prozessorkerne und durch die Anzahl der Teilmodelle beschränkt. Gemäß der vorliegend beschriebenen Ausführungsbeispiele ist also z.B. vorgesehen, das Modell zu analysieren, in der Simulation Modellteillaufzeiten zu messen, diese zu visualisieren und dann Handlungsanweisungen vorzuschlagen, wie man die Rechengeschwindigkeit erhöhen kann.

Bei HIL-Simulatoren wird die Lastverteilung per Hand erstellt, bei PC-basierten Simulatoren erfolgt die Lastverteilung implizit durch das Betriebssystem. Dabei gibt es sehr unterschiedliche Parameter, die die Geschwindigkeit der Gesamtsimulation beeinflussen. Für ein gegebenes Simulationssystem ist unter anderem durch die automatische Lastverteilung die Simulationsgeschwindigkeit einer Simulation nah am Optimum bezüglich der Ausführungsgeschwindigkeit. Deshalb sollte eine Beschleunigung des Systems darauf abzielen, das simulierte System oder die Hardware zu ändern. Die komplex wirkenden Parameter, die die Parallelisierbarkeit beeinflussen, sind dem Simulator prinzipiell bekannt und sollen mittels der vorliegend beschriebenen Verfahren analysiert und dem Nutzer in verständlicher Weise dargestellt werden.

Bei einer diskreten, eventbasierten Simulation wird nur an Zeitpunkten simuliert, an denen es etwas zu berechnen gibt. Simulationsanteile ohne Kausalabhängigkeit können gleichzeitig berechnet werden, ohne das Ergebnis zu verfälschen. Das ist im Allgemeinen an dem gleichen virtuellen Zeitpunkt.

Bei der Parallelisierung solcher Prozesse wird in der Literatur meist vereinfachend davon ausgegangen, dass die parallelisierbaren Anteile gleich groß sind und die Anzahl der Recheneinheiten deutlich geringer sind als die parallel zu rechnenden Aufgaben. In der Formel zu Ahmdahls Gesetz (Gene Amdahl: Validity of the Single Processor Approach to Achieving Large-Scale Computing Capabilities. In: AFIPS Conference Proceedings. 30, 1967, S. 483-485)

$$\eta_S = \frac{T}{t_S + \frac{t_P}{n_P}}$$

mit $\pm$ $\eta_s$ als maximale Beschleunigung durch Paralellisierung, $t_S$ als sequentieller Programmanteil, $t_p$ als paralleler Programmanteil und np als Anzahl der Recheneinheiten gibt es zum Beispiel keine Parameter zur Abbildung der Einzelprogrammlaufzeiten und Gruppen von parallelisierbaren Teilprogrammen.

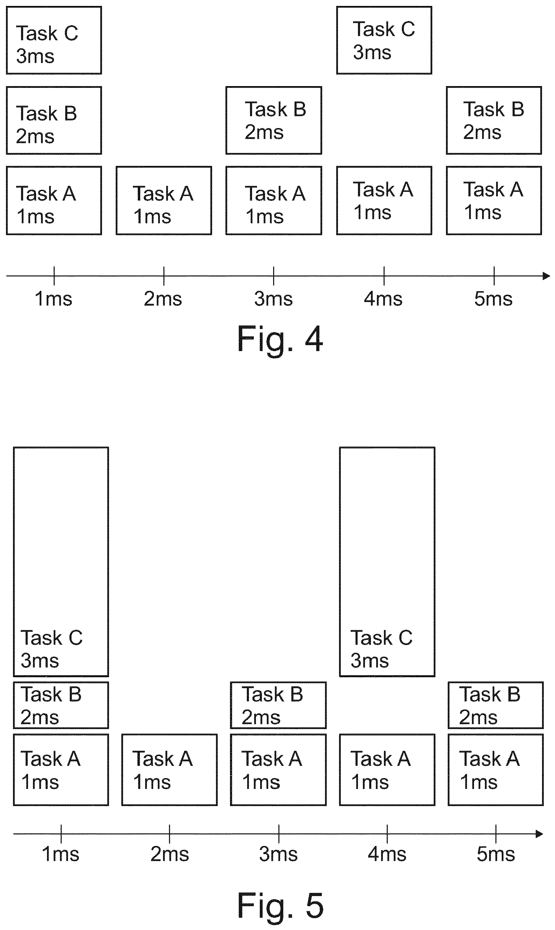

Vorliegend soll also durch eine statische Analyse eine Einteilung zwischen sequenziellen Modellteilen und parallelisierbaren Anteilen auf Task-Basis bestimmt werden. Periodische Tasks aus unterschiedlichen VPUs sollen als parallelisierbar gelten, sporadische nicht. Aus allen periodischen Tasks sollen alle möglichen Zeitpunkte bis zum kleinsten gemeinsamen Vielfachen aller Perioden bestimmt werden. Periodische Tasks sind extra ausgewiesen. Für diese Zeitpunkte werden die Tasks bestimmt, die jeweils berechnet werden müssen. Die Visualisierung dieser Daten ist bereits hilfreich für einen Nutzer und schematisch in Fig. 4 dargestellt.

Aus Fig. 4 sind die Tasks A, B und C ersichtlich, die zu den jeweiligen Taktzeitpunkten ausgeführt werden. Die Taktzeitpunkte haben hier einen Abstand von 1 ms zueinander. Dabei nimmt Task A 1 ms in Anspruch, Task B 2 ms und Task C 3 ms. In diesem konkreten Beispiel sind die Tasks relativ gut verteilt. Ausreißer wie ein zusätzlicher Task, der alle 10 Mikrosekunden gerechnet wird, würden jedoch sofort auffallen und könnte Veranlassung für einen Vorschlag sein, den häufig gerechneten Task seltener periodisch zu berechnen.

Diese Visualisierung kann schon vor der eigentlichen Simulation bereitgestellt werden. Während der Simulation wird die Berechnungsdauer der Tasks pro Zeitpunkt ermittelt und akkumuliert, indem sie beobachtet und gemessen wird. Das Messergebnis wird aufgrund der virtuellen Simulationszeit nicht verfälscht. Die Daten werden visualisiert, wie in Fig. 5 dargestellt. Die Darstellung in Figur 5 entspricht im Wesentlichen der Darstellung in Figur 4, wobei die Rechenlast bzw. echte Rechenzeit für einen jeweiligen Task durch die Höhe des den jeweiligen Task beschreibenden Kästchens angegeben ist.

In einer Darstellung wie in Fig. 5 gezeigt, würden auch die sporadischen Tasks auftauchen und speziell gekennzeichnet werden, um den Unterschied der statischen Systemanalyse zur realen Laufzeitanalyse festzustellen. Falls ein sporadischer Task periodisch ausgeführt wird, würde dem Nutzer mitgeteilt werden, dass es sinnvoll ist, diesen in einen echten periodischen Task umzuwandeln. Es wird also ein Vorschlag ermittelt, z.B. wie folgt:

- Mit einer virtuellen Maschine mit mehr Prozessorkernen kann die Simulation prozentual um ein bestimmtes maximales Maß beschleunigt werden kann.

- Die Simulation kann nicht durch mehr Prozessorkerne beschleunigt werden kann.

- Die Modelle weisen eine sehr unterschiedliche Rechenlast auf, so dass die Gewinne durch Parallelisierung kaum einen Einfluss haben.

- Es hat Vorteile, das größte Modell in zwei kleinere zu teilen.

- Die Zeitpunkte, an denen parallel gerechnet werden kann haben einen zu geringen Anteil an der Gesamtrechenzeit, so dass die Parallelberechnung kaum einen Einfluss auf die Gesamtrechenzeit hat. Besser abgestimmte Perioden können die Rechengeschwindigkeit positiv beeinflussen.

- Die Simulation kann noch durch schnellere Prozessorkerne beschleunigt werden.

- Sofern auch Bussimulation und Portkommunikation mit visualisiert werden, könnten auch Vorschläge in umgekehrter Richtung abfallen: Tasks, die intensiv miteinander kommunizieren und dabei für sich genommen sehr wenig Rechenzeit verbrauchen, könnten auch zusammengelegt werden.

Für eine Kostenoptimierung bezüglich der virtuellen Maschinen wird etwas anders vorgegangen. Hier gilt es ein Problem zu lösen, das durch folgendes Beispiel verständlich wird:

Auf einem Prozessor mit 6 Prozessorkernen sollen virtuelle Maschinen laufen, die unterschiedliche Simulationläufe so schnell wie möglich durchlaufen. Optimal für eine sequenzielle Abarbeitung wäre eine virtuelle Maschine mit 4 Prozessorkernen. Wenn man jedoch 3 virtuelle Maschinen mit jeweils 2 Prozessorkernen nutzt, wird die jeweilige Simulation selbst zwar etwas langsamer, aber nur so wenig, dass die Tatsache, dass 3 virtuelle Maschinen gleichzeitig laufen können, die Sache mehr als ausgleicht. Wenn 6 virtuelle Maschinen mit nur einem Prozessorkerne genutzt werden würden, würde sehr viel Overhead durch das Scheduling im Betriebssystem entstehen, so dass die Gesamtberechnung langsamer wäre als die mit 3 virtuelle Maschinen. Für die Speichernutzung gelten entsprechende Überlegungen.

Zur Durchführung einer solchen Kostenoptimierung wird wie folgt vorgegangen:

Auf jeder virtuellen Maschine einer bestimmten Auswahl wird das Modell einen kurzen Moment ausgeführt. Während der Simulation wird die Berechnungsdauer der Tasks pro Zeitpunkt ermittelt und akkumuliert. Dies erfolgt so lange, bis die Daten ausreichen, um die Ausführungszeiten hochzurechnen. Wenn für jede virtuelle Maschine die Kosten bekannt sind, kann damit die ökonomisch günstigste virtuelle Maschine bestimmt werden. Ganz besonders bei Cloud-Anwendungen ist es bevorzugt, als Zielfunktion die Kosten für unterschiedliche virtuelle Maschinen zu integrieren.

Die vorliegend beschriebenen Verfahren können also die Sachlage visualisieren und Handlungsanweisungen geben. Ein Nutzer verwendet ein Simulationssystem z.B. mit einer V-ECU und einem Umgebungsmodell. Er nutzt die Simulation auf einem Rechner mit 4 Prozessorkernen. Weil er eine kürzere Antwortzeit für seinen Test erreichen möchte, ohne die Testergebnisse zu beeinflussen, beschließt er, Möglichkeiten zur Parallelisierung zu untersuchen. Dazu nutzt er die vorliegend beschriebenen Verfahren und kann Visualisierungen erhalten, wie oben beschrieben und z.B. folgende Handlungsanweisung:

"Das Modell enthält folgende Tasks, die gleichzeitig berechnet werden können: VPU 1: Task 1 rechnet 0,43 ms und VPU 2: Task 3 rechnet 4,9 ms. Dem Simulator stehen 4 Prozessorkerne zur Verfügung. Durch eine Aufteilung in zwei Teile könnte die Gesamtsimulation um maximal 50 % schneller werden, abhängig vom Kommunikationsbedarf der VPUs durch Ports der VPUs."

Der Kunde teilt die VPU 2 nun in VPU 3 und VPU 4 und nutzt wieder das Verfahren. Dieses Mal sieht die Handlungsanweisung anders aus:

"Das Modell enthält folgende Tasks, die gleichzeitig berechnet werden können: VPU 1: Task 1 rechnet 0,43 ms, VPU 3: Task 3 rechnet 2,9 ms, VPU 4: Task 3 rechnet 2,8 ms. Durch eine besser ausgeglichene Aufteilung der Rechenzeit der VPU ist keine weitere Verbesserung möglich, weil für eine weitere Teilung zu wenig Prozessorkerne zur Verfügung stehen."

Der Vollständigkeit halber werden nachfolgend exemplarisch nochmals einige Regeln aufgezeigt, die sich mit den vorliegend beschriebenen Verfahren nutzen lassen:

- Wenn es bei einer V-ECU in einer bestimmten Periode viele auffällig kurze Berechnungen und eine lange Berechnung gibt, sollte man die Taktperiode anpassen.

- Wenn die Singlecore-Performance des aktuellen Rechners unter einem bestimmten Wert liegt, kann man den Wechsel auf potentere Hardware vorschlagen und auch die zu erwartende Leistungssteigerung angeben.

- Wenn die Anzahl der VPUs kleiner ist als die Anzahl der Prozessorkerne, kann man mitteilen, dass mehr Prozessorkerne nicht zu einer Beschleunigung führen werden.

- Wenn die Anzahl der VPUs größer ist als die Anzahl der Prozessorkerne, kann man mitteilen, wie sich eine Erhöhung der Prozessorkerne maximal auswirken würde.

- Wenn die Berechnung eines Modells keine Eingänge und Ausgänge im gleichen Takt besitzt, liegt es nahe, dass es zu oft berechnet wird. Man kann eine Änderung als Taktfrequenz die niedrigste Taktfrequenz der verbundenen Modelle vorschlagen.

- Zur Bestimmung der Maximalgeschwindigkeit: Man kann die kleinsten gemeinsamen Vielfachen der Taktfrequenz berechnen und der Parallelitätsgrad angeben. Daraus ergeben sich folgende Regeln für eine absehbare Anzahl an wiederkehrenden Zeitpunkten:

- Wenn ein Modell an einem wiederkehrenden Zeitpunkt mehr als doppelt so viel Zeit benötigt, als die anderen, würde sich eventuell eine Modellteilung lohnen.

- Wenn der Parallelitätsgrad in den wiederkehrenden Zeitpunkten gering ist, kann das auf ein nicht optimal ausgelastetes System hinweisen bzw. der Parallelitätsgrad in den häufigsten Ereignissen kann einen Hinweis auf die benötigten Rechenkerne ergeben.

- Das längste zu berechnende Modell pro Zeitpunkt bestimmt den Minimalwert der Rechenlänge und verrät, wie lang die Rechenlänge trotz Hardwareoptimierung bleiben wird.

- Wenn die Anzahl der Modelle die Anzahl der Kerne übersteigt, kann man auch eine Co-Simulation auf zwei oder noch mehr Rechnern durchführen. Weil die Kommunikationskosten durch das Modell bekannt sind, kann man genau berechnen, wo die Trennung optimal ist: Hier kann man jede Auftrennungsmöglichkeit einmal mit den Kommunikationskosten und den Parallelisierungsgewinnen gegenrechnen.

- Wenn der Speicherverbrauch zur Laufzeit einen bestimmten Wert übersteigt, sollte dieser als Nadelöhr angegeben werden.

- Unter Nutzung von Hypervisortechnologie wird sukzessive dem Simulator ein Rechenkern entzogen und die Simulationsgeschwindigkeit berechnet.

  - Der Maximalwert bei der Rechengeschwindigkeit wird für die Einzelgeschwindigkeit empfohlen.

  - Der Maximalwert aus dem Quotienten von Rechengeschwindigkeit und der Anzahl der Prozessorkerne wird als optimale Ausstattung in der Cloud empfohlen.

**Patentansprüche**

1. Verfahren zur Konfiguration einer auf einem Computer laufenden SIL-Simulation eines Steuergeräts, wobei für die SIL-Simulation des Steuergeräts auf dem Computer Software-Modelle für das Steuergerät mit einer Mehrzahl von Tasks installiert sind, die in einem vorbestimmten, periodisch aufeinanderfolgende Taktzeitpunkte aufweisenden Takt abgearbeitet werden, und der Computer eine Mehrzahl von Prozessorkernen aufweist, auf denen eine Mehrzahl virtueller Maschinen läuft, die jeweils vorbestimmte Tasks abarbeiten, mit folgenden Verfahrensschritten:

a) Ermitteln sporadischer Modellanteile und periodischer Modellanteile der Software-Modelle,
b) Erstellen einer Gruppe parallelisierbarer Tasks aus den periodischen Modellanteilen der Software-Modelle,
c) Bestimmen der einzelnen Taktzeitpunkte der parallelisierbaren Tasks bis zum kleinsten gemeinsamen Vielfachen aller Perioden zwischen den Taktzeitpunkten der parallelisierbaren Tasks,
d) Ermitteln der Berechnungsdauer der einzelnen Tasks zu ihren jeweiligen Taktzeitpunkten und
e) Ermitteln der Verteilung der Tasks auf die einzelnen virtuellen Maschinen und der Verteilung der virtuellen Maschinen auf die einzelnen Prozessorkerne auf der Grundlage des bestimmten kleinsten gemeinsamen Vielfachen aller Perioden zwischen den Taktzeitpunkten der parallelisierbaren Tasks und der ermittelten Berechnungsdauer der einzelnen Tasks zu ihren jeweiligen Taktzeitpunkten derart, dass die Rechenzeit der SIL-Simulation minimal ist.

2. Verfahren nach Anspruch 1, mit folgendem zusätzlichen Verfahrensschritt:
f) Umkonfigurieren der Software-Modelle entsprechend der in Schritt e) ermittelten Verteilung der Tasks auf die einzelnen virtuellen Maschinen und der Verteilung der virtuellen Maschinen auf die einzelnen Prozessorkerne.

3. Verfahren nach Anspruch 1 oder 2, wobei der Schritt e) des Ermittelns der Verteilung der Tasks auf die einzelnen virtuellen Maschinen und der der Verteilung der virtuellen Maschinen auf die einzelnen Prozessorkerne die folgende Umkonfiguration umfasst:
Auslagern eines Teils der SIL-Simulation auf wenigstens einen weiteren Computer, wenn die Anzahl der Tasks die Anzahl der Prozessorkerne des bisher für die SIL-Simulation verwendeten Computers übersteigt.

4. Verfahren nach einem der vorhergehenden Ansprüche, wobei der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Ändern der Periode eines bestimmten Tasks auf eine größere Periode.

5. Verfahren nach einem der vorhergehenden Ansprüche, wobei der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Aufteilen eines rechenintensiveren Tasks in wenigstens zwei weniger rechenintensive Tasks.

6. Verfahren nach einem der vorhergehenden Ansprüche, wobei der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Wechseln auf schnellere Prozessorkerne.

7. Verfahren nach einem der vorhergehenden Ansprüche, wobei der Schritt e) des Ermittelns der Verteilung der Tasks auf die einzelnen virtuellen Maschinen und der Verteilung der virtuellen Maschinen auf die einzelnen Prozessorkerne die folgende Umkonfiguration umfasst:
Zusammenlegen wenigstens eines Teils der Tasks, die miteinander kommunizieren.

8. Verfahren nach einem der vorhergehenden Ansprüche, wobei der Schritt e) des Ermittelns der Verteilung der Tasks auf die einzelnen virtuellen Maschinen und der der Verteilung der virtuellen Maschinen auf die einzelnen Prozessorkerne die folgende Umkonfiguration umfasst:
Zuweisen wenigstens eines weiteren Prozessorkerns zu einer virtuellen Maschine.

9. Nichtflüchtiges, computerlesbares Speichermedium mit einem darauf abgespeicherten Computerprogramm, dass bei Ausführung auf einem Prozessor ein Verfahren nach einem der vorhergehenden Ansprüche bewirkt.

10. Verfahren zur Konfiguration einer auf einem Computer laufenden SIL-Simulation eines Steuergeräts, wobei für die SIL-Simulation des Steuergeräts auf dem Computer Software-Modelle für das Steuergerät mit einer Mehrzahl von Tasks installiert sind, die in einem vorbestimmten Takt mit einer vorbestimmten Periode zwischen den einzelnen Taktzeitpunkten abgearbeitet werden, und der Computer eine Mehrzahl von Prozessorkernen aufweist, auf denen eine Mehrzahl virtueller Maschinen läuft, die jeweils vorbestimmte Tasks abarbeiten, mit folgenden Verfahrensschritten:

a) Ermitteln sporadischer Modellanteile und periodischer Modellanteile der Software-Modelle,
b) Erstellen einer Gruppe parallelisierbarer Tasks aus den periodischen Modellanteilen der Software-Modelle,
c) Bestimmen der einzelnen Taktzeitpunkte der parallelisierbaren Tasks bis zum kleinsten gemeinsamen Vielfachen aller Perioden zwischen den Taktzeitpunkten der parallelisierbaren Tasks und

g) Visualisieren der Tasks, die zu einem jeweiligen Taktzeitpunkt auszuführen sind.

**11.** Verfahren nach Anspruch 10, mit folgendem zusätzlichen Verfahrensschritt:

d) Ermitteln der Berechnungsdauer der einzelnen Tasks zu ihren jeweiligen Taktzeitpunkten, wobei

in Schritt g) des Visualisierens der Tasks, die zu einem jeweiligen Taktzeitpunkt auszuführen sind, zusätzlich die jeweilige Berechnungsdauer der einzelnen Tasks visualisiert wird.

Fig. 1

Fig. 2

Fig. 3

| | | | | |
|---|---|---|---|---|
| Task C 3ms | | | Task C 3ms | |
| Task B 2ms | | Task B 2ms | | Task B 2ms |
| Task A 1ms | Task A 1ms | Task A 1ms | Task A 1ms | Task A 1ms |

| | | | | |
|---|---|---|---|---|
| 1ms | 2ms | 3ms | 4ms | 5ms |

## Fig. 4

| | | | | |
|---|---|---|---|---|
| Task C 3ms | | | Task C 3ms | |
| Task B 2ms | | Task B 2ms | | Task B 2ms |
| Task A 1ms | Task A 1ms | Task A 1ms | Task A 1ms | Task A 1ms |

| | | | | |
|---|---|---|---|---|
| 1ms | 2ms | 3ms | 4ms | 5ms |

## Fig. 5

**EUROPÄISCHER RECHERCHENBERICHT**

Nummer der Anmeldung

EP 21 21 5811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Flake Sven: "What are virtual ECUs? – dSPACE", , 22. August 2018 (2018-08-22), Seiten 1-9, XP055921087, Gefunden im Internet: URL:https://www.dspace.com/en/ltd/home/news/engineers-insights/blog-virtuals-ecus-1808.cfm [gefunden am 2022-05-13] * Seite 2, Absatz 2 – Seite 4, Absatz 4 * ───── | 1-11 | INV. G06F9/455 G06F9/48 |
| Y | HAN C-C ET AL: "Scheduling parallelizable jobs on multiprocessors", PROCEEDINGS OF THE REAL TIME SYSTEMS SYMPOSIUM. SANTA MONICA, DEC. 5 – 7, 1989; [PROCEEDINGS OF THE REAL TIME SYSTEMS SYMPOSIUM], LOS ALAMITOS, IEEE COMP. SOC. PRESS, US, Bd. SYMP. 10, 5. Dezember 1989 (1989-12-05), Seiten 59-67, XP010017777, DOI: 10.1109/REAL.1989.63557 ISBN: 978-0-8186-2004-1 * Zusammenfassung * * Seite 59, linke Spalte, Abschnitt 1, Absatz 1 – Absatz 2 * * Seite 62, linke Spalte, Abschnitt 4, Absatz 1 * * Seite 64, rechte Spalte, Abschnitt 5, Absatz 1 – Absatz 4 * ───── -/-- | 1-11 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 20. Mai 2022 | Milasinovic, Goran |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## EUROPÄISCHER RECHERCHENBERICHT

Nummer der Anmeldung

EP 21 21 5811

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Anonymous: "AUTOSAR – Wikipedia", , 17. Dezember 2021 (2021-12-17), Seiten 1-10, XP055922432, Gefunden im Internet: URL:https://en.wikipedia.org/w/index.php?title=AUTOSAR&oldid=1060715754 [gefunden am 2022-05-18] * Seite 3, Abschnitt "Classic Platform", Absatz 1 – Absatz 2 * ----- | 1-11 | |
| A | Chakraborty Sarthak ET AL: "Scheduling Algorithms for Shared-Memory Multi-Processor Systems", , 13. Oktober 2020 (2020-10-13), Seiten 1-13, XP055922898, Gefunden im Internet: URL:https://medium.com/aosd-reading-assignment/scheduling-algorithms-for-shared-memory-multi-processor-systems-9c62208ce10c [gefunden am 2022-05-19] * Seite 2 * * Seite 10 * ----- | 1-11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Mai 2022 | Milasinovic, Goran |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
    Dokument

EPO FORM 1503 03.82 (P04C03)

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GENE AMDAHL.** Validity of the Single Processor Approach to Achieving Large-Scale Computing Capabilities. *AFIPS Conference Proceedings,* 1967, vol. 30, 483-485